# DEMANDE DE BREVET EUROPEEN

(11) **EP 0 859 268 A1**
(43) Date de publication de la demande: **19.08.1998**
(21) Numéro de dépôt: 98400249.3
(22) Date de dépôt: 05.02.1998
(51) Int. Cl.: G02F 2/00

(54) **Convertisseur de longueur d'onde de signaux optiques binaires**

(30) Priorité: 14.02.1997 FR 9701767
(71) Demandeur: ALCATEL ALSTHOM COMPAGNIE GENERALE D'ELECTRICITE, 75008 Paris (FR)
(72) Inventeur: Jourdan, Amaury, 92310 Sevres (FR); Soulage, Guy, 94400 Vitry S/ Seine (FR); Jacquinot, Jean-claude, 94270 Le Kremlin Bicetre (FR); Sotom, Michel, 75015 Paris (FR)
(74) Mandataire: Fournier, Michel Robert Marie

(57) **Abrégé**

L'invention concerne un convertisseur de longueur d'onde comprenant une structure interférométrique (1) pour fournir un signal optique de sortie, dans lequel une première et une seconde branche comportent un premier (OA1) et un deuxième (OA2) amplificateurs optiques semi-conducteurs couplées à un laser de sonde (2) commun dans lequel ledit premier amplificateur (OA1) est agencé pour recevoir un signal d'entrée modulant (E), ledit convertisseur étant caractérisé en ce qu'il comporte des moyens de régulation (3) pour agir sur la puissance optique totale fournie audit amplificateur en réponse à un signal de contre-réaction représentatif du taux d'extinction du signal de sortie.

L'invention s'applique à la réalisation de systèmes de routage à multiplexage en longueur d'onde.

## Description

L'invention se situe dans le domaine des systèmes optoélectroniques utilisés pour la transmission ou le traitement optique de données numériques optiques.

Dans ces systèmes, les informations sont souvent sous la forme de données binaires représentées par des impulsions modulant une onde porteuse optique. Une valeur binaire est donc déterminée en fonction du niveau d'amplitude (ou de puissance) de l'onde optique modulée.

Au cours de la transmission, ce signal peut subir des dégradations qui rendent plus difficile au niveau des récepteurs la détection des niveaux hauts et bas du signal reçu.

Dans le domaine de l'amplitude, la qualité d'un signal optique est habituellement définie par deux paramètres : le rapport signal à bruit et le taux d'extinction.

Le rapport signal à bruit est défini comme le rapport de la puissance optique du signal à la puissance de bruit dans une bande de longueur d'onde contenant la longueur d'onde de la porteuse du signal.

Le taux d'extinction est défini comme le rapport des puissances correspondant respectivement aux niveaux hauts et bas du signal. Ce taux doit être suffisamment élevé malgré des variations du signal d'entrée.

Les convertisseurs de longueur d'onde de signaux optiques sont utilisés dans le domaine des télécommunications pour convertir le signal optique transmis, d'une longueur d'onde à une autre longueur d'onde tout en conservant ses performances.

De tels changements de longueur d'onde sont utilisés en particulier lors du routage des signaux pour résoudre les problèmes de contention.

Ainsi, un convertisseur doit être capable à partir d'un signal d'entrée modulé de mauvaise qualité de fournir un signal de sortie dont les niveaux hauts sont stabilisés avec une puissance optique constante, dont les niveaux bas ont une puissance pratiquement nulle, tout en présentant un rapport signal à bruit élevé.

Une solution envisageable pour augmenter le taux d'extinction pour la réalisation des convertisseurs de longueur d'onde consiste à utiliser une structure interférométrique, de type Mach-Zehnder ou équivalente.

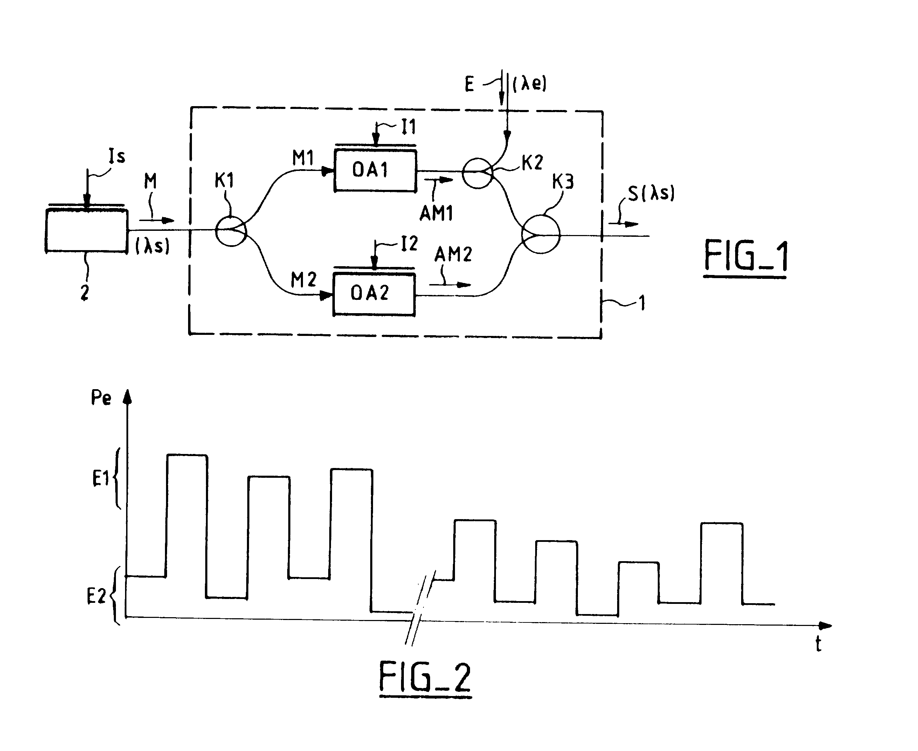

Une telle structure est représentée sur la figure 1 et se compose de deux branches véhiculant deux ondes cohérentes couplées pour former le signal de sortie. L'une des branches comporte un milieu dont l'indice varie en fonction de la puissance optique qu'elle véhicule et un signal d'entrée est introduit dans cette branche. Les variations de puissance du signal d'entrée modulent alors l'indice et les deux ondes peuvent interférer de façon destructive ou constructive en fonction du niveau de puissance du signal d'entrée.

Une telle structure permet bien d'améliorer le taux d'extinction mais présente l'inconvénient que les conditions d'interférence destructive et constructive sont très contraignantes vis-à-vis du signal d'entrée, en particulier de sa longueur d'onde, de son niveau de puissance à l'état haut et de sa polarisation.

Les convertisseurs de longueur d'onde basés sur une structure interférométrique à amplificateurs optiques semi-conducteurs de type Mach-Zehnder ont donc un fonctionnement très sensible aux fluctuations de ces paramètres.

L'invention a pour but de remédier à ces inconvénients. Elle a pour but en particulier de fournir un dispositif convertisseur de longueur d'onde transparent au débit et au protocole du signal traité et qui procure un taux d'extinction élevé autrement dit dont la qualité du signal de sortie (signal converti) reste inaltérée malgré les variations des caractéristiques optiques du signal d'entrée (longueur d'onde, puissance optique, polarisation).

La présente invention a pour objet un convertisseur de longueur d'onde muni d'un moyen de régulation stabilisant les conditions de fonctionnement, intégrable dans une structure interférométrique de type Mach-Zehnder ou équivalente.

La présente invention a plus précisément pour objet un convertisseur de longueur d'onde comprenant une structure interférométrique pour fournir un signal optique de sortie, dans lequel une première et une seconde branche comporte un premier et un deuxième amplificateurs optiques semi-conducteurs couplées à un laser de sonde commun dans lequel ledit premier amplificateur est agencé pour recevoir un signal d'entrée modulant, ledit convertisseur étant caractérisé en ce qu'il comporte des moyens de régulation pour agir sur la puissance optique totale fournie audit amplificateur en réponse à un signal de contre-réaction représentatif du taux d'extinction du signal de sortie.

Dans une première solution envisagée, le signal de contre-réaction est la modulation du courant induite dans la première amplification.

Dans une deuxième solution envisagée, le signal de contre-réaction est la puissance radiofréquence du signal optique de sortie.

Plusieurs points d'application de la contre-réaction sont prévus et font l'objet de modes de réalisation décrits dans la suite.

Les différentes réalisations comportent des amplificateurs optiques semi-conducteurs qui peuvent être aisément intégrés à la structure interférométrique. Par ailleurs, ces solutions sont tout à fait adaptées à la mise en cascade du composant. Le coût de fabrication de tels composants reste tout à fait compatible avec les productions envisagées.

Le convertisseur de longueur d'onde, objet de la présente invention, s'applique donc avantageusement au traitement des données dans les systèmes de routage à multiplexage en longueur d'onde. Il permet de résoudre les problèmes de contention sans dégradation du signal.

Comme cela va apparaître dans la suite, en plus de l'effet d'amplification apporté par les amplificateurs semi-conducteurs, on exploite aussi leur propriété de posséder un indice fonction à la fois de la puissance optique totale qu'il reçoit et du courant injecté dans sa couche active. Cela permet donc d'ajuster aisément le point de fonctionnement de la structure interférométrique.

D'autres aspects et avantages de l'invention apparaîtront dans la suite de la description qui est donnée à titre d'exemple illustratif et non limitatif et qui est faite en référence aux dessins annexés sur lesquels :
- la figure 1, représente schématiquement une structure interférométrique de type Mach-Zehnder,
- la figure 2, est une courbe illustrant un signal binaire d'entrée,
- la figure 3, représente schématiquement un convertisseur de longueur d'onde selon un premier mode de réalisation,
- la figure 4, représente schématiquement un convertisseur de longueur d'onde selon un deuxième mode de réalisation,
- la figure 5, représente schématiquement un convertisseur de longueur d'onde selon un troisième mode de réalisation,
- la figure 6, représente schématiquement un convertisseur de longueur d'onde selon un quatrième mode de réalisation,

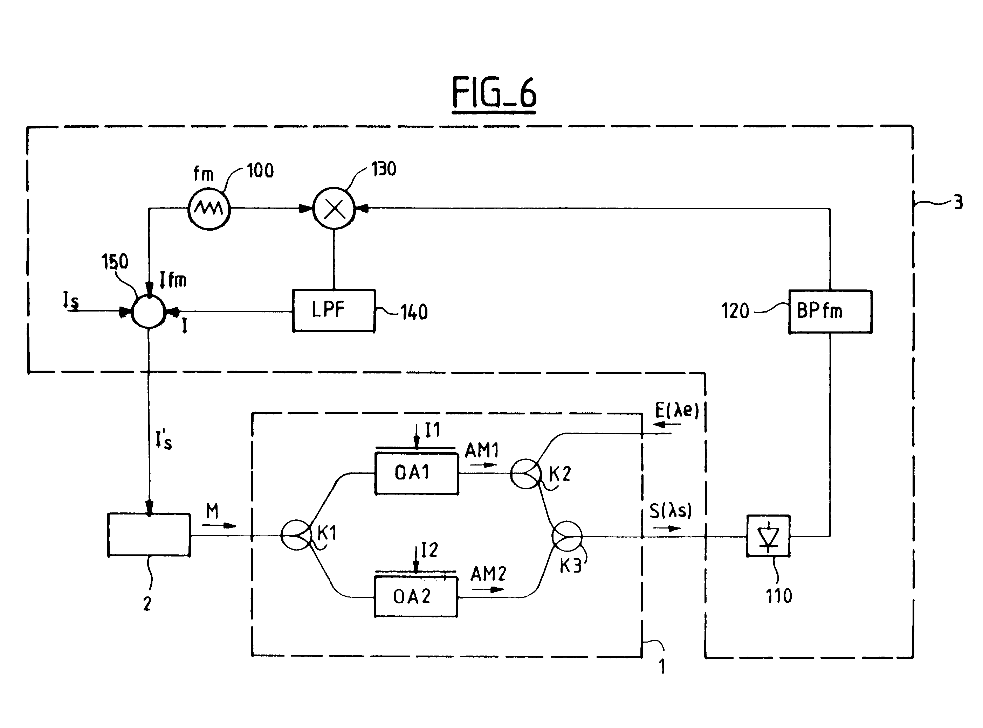

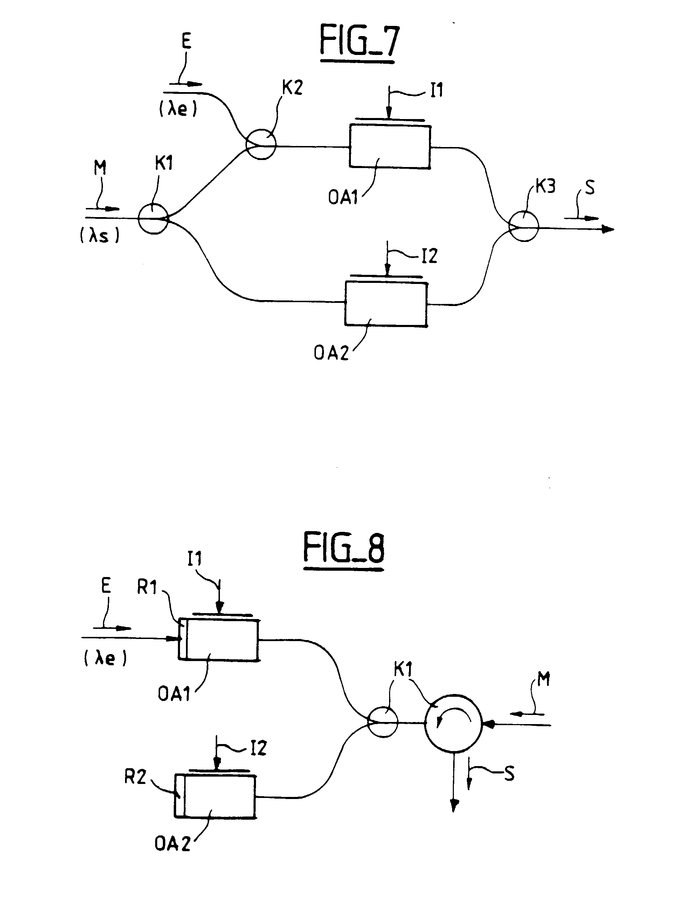

- les figures 6 et 7, représentent schématiquement des variantes de réalisation de structures interférométriques permettant de réaliser un convertisseur de longueur d'onde selon l'invention.

Dans tout le reste de la description, les mêmes éléments portent les mêmes références.

Le dispositif de la figure 1 constitue un convertisseur de longueur d'onde selon l'art antérieur dont on rappelle ici le fonctionnement.

Il comporte une structure interférométrique 1 constituée de deux branches guidantes munies respectivement d'amplificateurs optiques semi-conducteurs OA1 et OA2. Un premier coupleur K1 permet de coupler une extrémité de chacune de ces branches à une source laser 2 fournissant une onde porteuse de sortie M de longueur d'onde ls.

Un second coupleur K2 est disposé de façon à permettre l'introduction du signal d'entrée E dans le premier amplificateur OA1. Un troisième coupleur K3 relié au coupleur K2 et au second amplificateur OA2 est disposé de façon à fournir un signal de sortie S résultant du couplage d'ondes auxiliaires AM1 et AM2 fournies respectivement par les amplificateurs OA1 et OA2. Les ondes AM1 et AM2 correspondent aux ondes M1 et M2 issues du coupleur K1 et amplifiées respectivement par les amplificateurs OA1 et OA2.

Des courants I1 et I2 sont injectés respectivement dans les amplificateurs OA1 et OA2. Selon une première possibilité, ces courants sont ajustés de façon à ce que le signal de sortie S résulte d'une interférence constructive des ondes AM1 et AM2 lorsque la puissance du signal modulant d'entrée E est basse et résulte d'une interférence destructive dans le cas contraire.

La figure 2, représente de façon schématique les variations en fonction du temps de la puissance optique Pe du signal d'entrée E. On a pris comme exemple un premier train de données à forte puissance optique moyenne, suivi d'un second train de données à puissance optique moyenne plus faible et des niveaux hauts E1 et bas E0 de signal E présentant des fluctuations importantes.

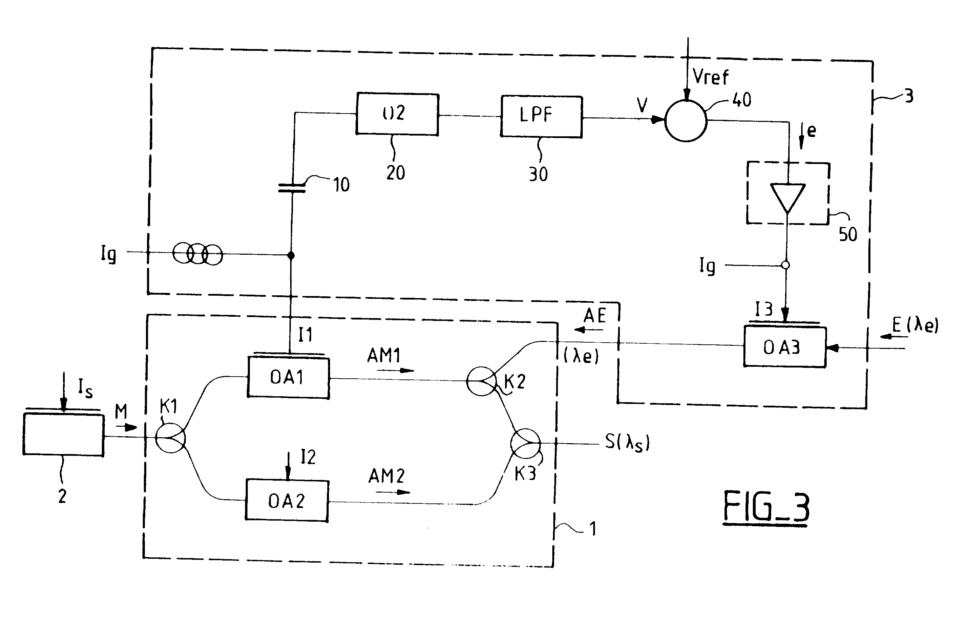

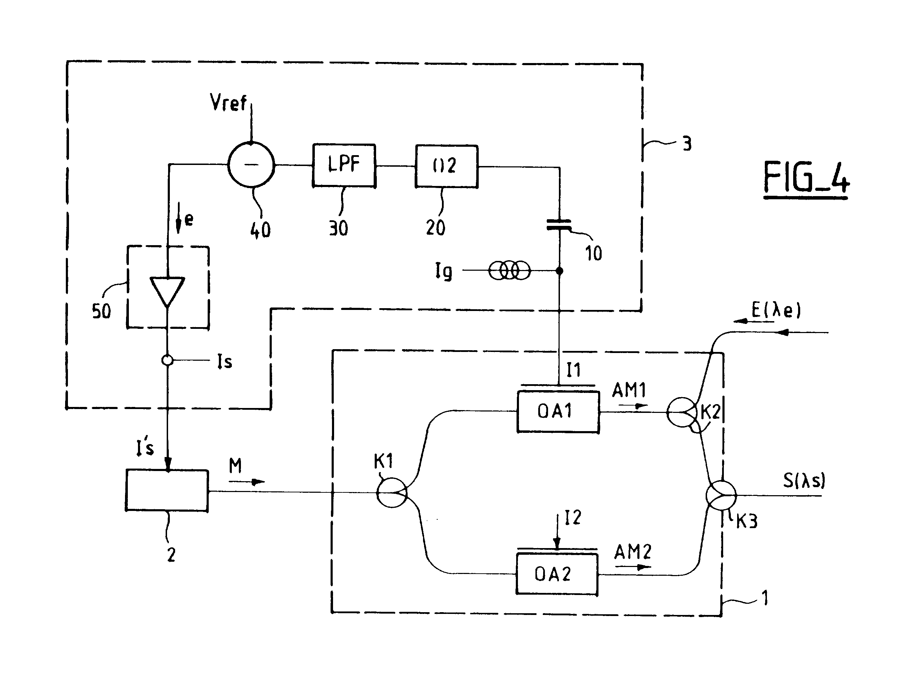

Les convertisseurs schématisés sur les figures 3 et 4 présentent un moyen de contrôle de la puissance optique du signal de sortie qui repose sur le même principe que celui de la mesure du courant de modulation induite dans l'amplificateur optique semi-conducteur OA1 qui reçoit la puissance optique totale. Cet amplificateur est utilisé comme photodiode par l'injection du signal d'entrée. Plus l'injection est importante, plus le courant modulé est élevé. En le comparant à une valeur de référence considérée comme optimale on obtient un signal d'erreur permettant d'ajuster un paramètre de commande du convertisseur.

Les convertisseurs représentés sur ces figures comportent donc une structure interférométrique 1 telle qu'elle vient d'être rappelée à propos de la figure 1 et une boucle de régulation 3 entre l'amplificateur optique semi-conducteur OA1 qui reçoit la puissance optique totale et un point d'application qui permet d'agir sur cette puissance de manière à maintenir un taux d'extinction maximum.

Le point d'application de la contre-réaction est soit sur un amplificateur OA3 placé sur l'entrée du signal modulant E (cf. figure 3), soit sur le laser de sonde 2 (cf. figure 4).

Il pourrait être également sur un amplificateur optique semi-conducteur placé entre le laser et le coupleur K1 (solution non représentée).

Dans toutes ces solutions la boucle 3 permet de détecter la modulation de courant induite dans l'amplificateur optique semi-conducteur OA1 qui est une image du signal d'entrée E. Cette modulation de courant est obtenue à une sortie du générateur de courant de gain Ig de l'amplificateur OA1, à laquelle un condensateur 10 est connecté suivi d'un intégrateur 20 et d'un filtre passe bas 30. La valeur moyenne de cette modulation ou puissance crête est obtenue à la sortie de cet ensemble, et est comparée à une valeur de référence par le comparateur 40.

La valeur de référence est prédéterminée pour obtenir un point de fonctionnement optimum du convertisseur, c'est-à-dire un taux d'extinction maximum.

Dans le cas de la figure 3, lorsqu'il y a une différence entre les deux valeurs appliquées en entrée du comparateur 40 celui-ci délivre un signal d'erreur e qui est amplifié 50 puis appliqué au générateur de courant continu Ig de l'amplificateur optique OA3, de manière par exemple, à corriger son courant de gain pour modifier la puissance du signal optique d'entrée et maintenir ainsi le taux d'extinction maximum.

Dans le cas du mode de réalisation de la figure 4, on pratique également une détection du courant de modulation de l'amplificateur optique semi-conducteur OA1 au moyen du condensateur 10 relié au générateur de courant de gain Ig de cet amplificateur, de l'intégrateur 20 et du filtre passe bas 30. La valeur moyenne de cette modulation ou puissance crête obtenue en sortie de cet ensemble est comparée à une valeur de référence prédéterminée. Le comparateur 40 génère un signal d'erreur e qui est non nul dans le cas où les deux valeurs qu'il reçoit en entrée sont différentes. Ce signal d'erreur est appliqué après amplification 50 au générateur de courant de gain Is du laser sonde pour modifier la puissance du laser sonde 2 qui crée l'onde optique sur laquelle est transférée l'information provenant du signal optique d'entrée E.

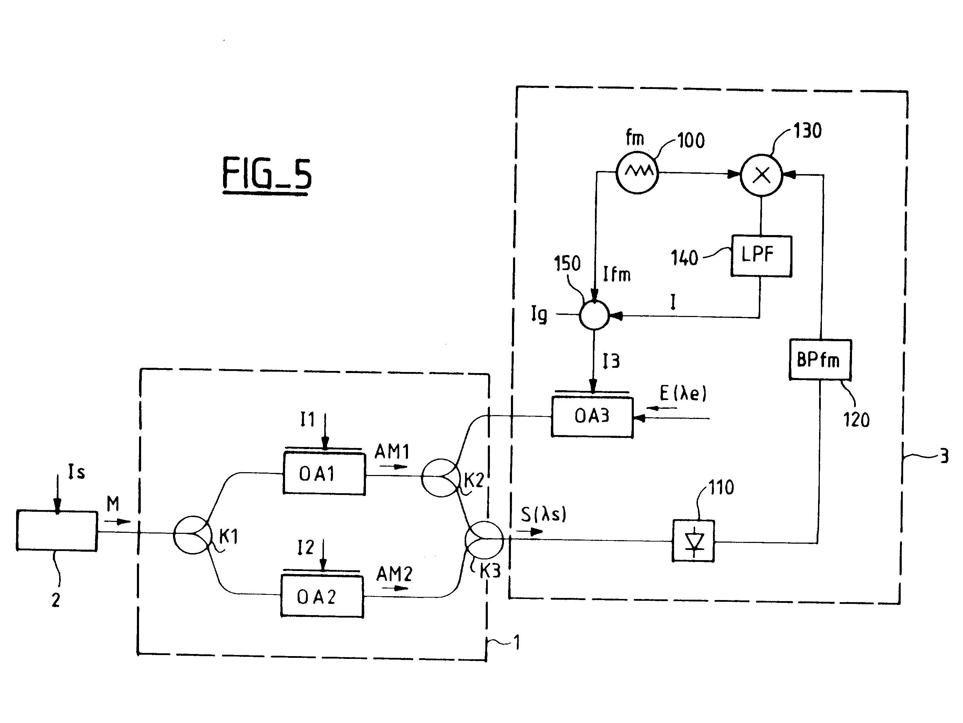

Les figures 5 et 6, représentent un convertisseur de longueur d'onde conforme à l'invention présentant un moyen de contrôle de la puissance optique totale reposant sur un principe commun mais différent de celui qui vient d'être décrit. Ce principe est basé sur la mesure en sortie du convertisseur de la puissance radiofréquence du signal optique c'est à dire la puissance totale moins sa composante continue. En effet cette information est représentative du taux d'extinction. (Elle est maximale quand le taux est maximal).

Selon ces modes de réalisation, on associe à une structure interférométrique 1, une boucle de régulation 3 entre la sortie qui fournit le signal optique converti S et un point d'application qui permet de modifier la puissance optique totale fournie à l'amplificateur OA1.

Ainsi selon ces deux modes de réalisation, on introduit soit à l'entrée du signal modulant E soit à l'entrée du signal de sonde M, une faible modulation à une fréquence fm suffisamment élevée pour une réponse rapide du convertisseur et suffisamment faible par rapport à celle de la modulation du signal d'entrée E afin de ne pas perturber cette dernière. A titre d'exemple, cette fréquence fm est de l'ordre de 5000 à 50 000 HZ.

Sur la figure 5 la modulation fm est appliquée par le modulateur 100 à travers l'amplificateur optique semi-conducteur OA3. De façon avantageuse le courant de modulation Ifm est introduit dans le générateur 140 de courant de gain Ig de l'amplificateur OA3.

Une détection synchrone est mise en place par la boucle 3. Le signal réponse du convertisseur à ce signal de modulation est comparé au signal injecté.

A cette fin, en détectant le signal de sortie S, on détecte aussi la raie de modulation qui a été créé par la modulation fm. La sortie de la photodiode de détection 110 est appliquée à l'entrée d'un filtre passe bande 120 centré sur la fréquence fm.

On obtient en sortie de ce filtre le signal de modulation fm réponse du convertisseur.

En effectuant le produit dans le circuit 130 du signal de modulation fm appliqué sur l'entrée du signal E et du signal de modulation fm réponse du convertisseur à cette faible modulation on sait si ces signaux sont en phase ou en opposition de phase.

Dans le cas ou le convertisseur est à son point de fonctionnement optimum, c'est à dire qu'il a un taux d'extinction maximum, le produit de ces modulations est nul.

Ainsi, lorsque ce produit est non nul cela signifie que la puissance optique de sortie n'est pas constante et que le point de fonctionnement n'est plus à son optimum.

La réponse du convertisseur est de type parabolique, le point de fonctionnement optimal est au sommet de cette parabole. Lorsque le convertisseur ne fonctionne pas avec un taux d'extinction optimum, le point de fonctionnement se déplace sur la courbe de réponse vers la droite ou vers la gauche à partir du sommet. La position du point de fonctionnement est repérable par le signe du produit de modulation qui diffère selon que les signaux entrant dans le multiplieur 130 sont en phase ou en opposition de phase.

La sortie du multiplieur 130 délivre un signal d'erreur qui va permettre de modifier le paramètre de commande de puissance du convertisseur, à savoir dans cet exemple, le courant de gain de l'amplificateur OA3. Ce signal est appliqué à l'entrée d'un filtre passe bas 140 afin de ne garder que le signal d'erreur de modulation fm. Il s'agit d'un courant continu I dont le signe et le niveau dépendent de la qualité de modulation. Ce signal d'erreur change en fonction des caractéristiques de modulation du signal composé.

Ce signal d'erreur I est injecté dans le générateur de courant 140 et va permettre selon sa valeur soit de le diminuer, soit de l'augmenter.

La figure 6 correspond à une deuxième variante de réalisation correspondant à ce principe de détection cohérente, selon laquelle le point d'application de la contre-réaction est le laser de sonde 2. Le signal d'erreur I va permettre dans ce cas de modifier le courant de commande Is du laser de sonde.

La figure 7 représente une variante de réalisation de la structure interférométrique 1 à laquelle s'applique l'invention. La structure est aussi de type Mach-Zehnder mais le signal modulant E et l'onde M sont injectés dans le premier amplificateur OA1 selon le même sens de propagation. Le fonctionnement est analogue à celui de la structure représentée à la figure 1 à la différence près qu'un filtre de sortie F' capable d'éliminer efficacement la longueur d'onde le soit placé en sortie du dispositif.

La figure 8 représente une autre structure de type Michelson équivalente à la précédente à laquelle s'applique l'invention. Selon cette variante, les deux amplificateurs OA1 et OA2 sont couplés par une seule de leurs extrémités, les faces opposées étant munies d'un revêtement réfléchissant R1, R2. Le signal modulant est injecté dans le premier amplificateur OA1 par l'intermédiaire de la face R1 et l'onde M est injectée dans les deux amplificateurs OA1 et OA2 par les faces opposées aux faces R1 et R2 par l'intermédiaire d'un ensemble K1 formé d'un circulateur associé à un coupleur. Un premier port du circulateur reçoit l'onde M, le second port est couplé aux deux amplificateurs OA1, OA2 et un troisième port fournit le signal de sortie S.

## Revendications

1. Convertisseur de longueur d'onde comprenant une structure interférométrique (1) pour fournir un signal optique de sortie, dans lequel une première et une seconde branche comportent un premier (OA1) et un deuxième (OA2) amplificateurs optiques semi-conducteurs couplées à un laser de sonde (2) commun dans lequel ledit premier amplificateur (OA1) est agencé pour recevoir un signal d'entrée modulant (E), ledit convertisseur étant caractérisé en ce qu'il comporte des moyens de régulation (3) pour agir sur la puissance optique totale fournie audit amplificateur en réponse à un signal de contre-réaction représentatif du taux d'extinction du signal de sortie.

2. Convertisseur de longueur d'onde selon la revendication 1, caractérisé en ce que le signal de contre-réaction est la modulation de courant induite dans le premier amplificateur (OA1).

3. Convertisseur de longueur d'onde selon la revendication 1, caractérisé en ce que le signal de contre-réaction est la puissance radiofréquence du signal optique de sortie.

4. Convertisseur de longueur d'onde selon la revendication 1, caractérisé en ce que les moyens de régulation (3) sont aptes à ajuster la puissance du signal optique d'entrée ou du laser de sonde.

5. Convertisseur de longueur d'onde selon l'une quelconque des revendications 1, 2 ou 4, caractérisé en ce que les moyens de régulation (3) comportent des moyens de mesure (10, 20, 30) de la modulation de courant induite dans le premier amplificateur (OA1), des moyens de comparaison (40) par rapport à un signal de référence fournissant un signal d'erreur (e) et des moyens de contrôle (OA3, 2) de la puissance optique d'entrée ou du laser réagissant à ce signal d'erreur.

6. Convertisseur de longueur d'onde selon la revendication 5, caractérisé en ce que les moyens de contrôle (OA3) sont formés par un amplificateur (OA3) ou atténuateur et un de ses paramètres de contrôle, ledit amplificateur ou atténuateur étant placé en amont de la structure interférométrique (1) de manière à recevoir le signal d'entrée modulant (E).

7. Convertisseur de longueur d'onde selon la revendication 5, caractérisé en ce que les moyens de contrôle (2) sont formés par le laser de sonde (2) et son courant de commande (Is).

8. Convertisseur de longueur d'onde selon les revendications 1, 3 ou 4, caractérisé en ce que les moyens de régulation (3) comportent des moyens d'injection (100) en entrée du convertisseur d'un signal de modulation de caractéristiques prédéterminées pour ne pas perturber le signal d'entrée, des moyens de détection (110) du signal de sortie correspondant et de comparaison (130) du signal injecté aptes à générer un signal d'erreur (I), et des moyens de contrôle (OA3, 2) de la puissance optique d'entrée ou du laser de sonde réagissant à ce signal d'erreur.

9. Convertisseur de longueur d'onde selon la revendication 8, caractérisé en ce que les moyens de contrôle (OA3) sont formés par un amplificateur (OA3) ou atténuateur et un de ses paramètres de contrôle, ledit amplificateur ou atténuateur étant placé en amont de la structure interférométrique (1) de manière à recevoir le signal d'entrée modulant (E).

10. Convertisseur de longueur d'onde selon la revendication 8, caractérisé en ce que les moyens de contrôle (2) sont formés par le laser de sonde (2) et son courant de commande (Is).
